# EUROPEAN PATENT SPECIFICATION

(11) **EP 3 338 569 B1**
(45) Date of publication and mention of the grant of the patent: **28.08.2019**
(21) Application number: 17209191.0
(22) Date of filing: 20.12.2017
(51) Int. Cl.: A24F 47/00

(54) **CHARGER FOR ELECTRONIC CIGARETTE**
LADEVORRICHTUNG FÜR ELEKTRONISCHE ZIGARETTE
CHARGEUR POUR CIGARETTE ÉLECTRONIQUE

(30) Priority: 20.12.2016 CN 201621402958 U
(43) Date of publication of application: 27.06.2018
(73) Proprietor: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(56) References cited:
- EP-A1- 2 454 956
- WO-A1-2016/012795
- CN-U- 203 262 285
- US-A1- 2012 227 753

## Description

### TECHNICAL FIELD

The present disclosure relates to the technical field of electronic components, and in particular to a charger for an electronic cigarette.

### BACKGROUD

Electronic cigarette is an electronic product that is created to simulate conventional cigarettes and it has the same appearance, aerosol, flavor and feeling as conventional cigarettes. The electronic cigarette works by changing nicotine into a vapor for a user to inhale, using means such as atomization. The electronic cigarette can be charged through a dedicated charger, so that the electronic cigarette can be used repeatedly. At present, chargers for electronic cigarettes available on the market all employ wire chargers having a single charging interface. This type of charger has a drawback that it cannot charge multiple electronic cigarettes simultaneously. If multiple electronic cigarettes are to be charged simultaneously, it is needed to carry multiple charging wires. However, it is troublesome to carry multiple charging wires; moreover, many sockets are required too.

In view of the above drawbacks, it is necessary to provide a new charger for electronic cigarettes.

CN 203 262 285 U discloses a base for an electronic cigarette; EP 2 454 956 A1 discloses an electrically heated smoking system including at least two units; WO 2016/012795 A1 discloses a re-charging pack for an e-cigarette; US 2012/227753A1 discloses a charger for electronic cigarette components.

### SUMMARY

The present disclosure aims to provide a charger for an electronic cigarette, so as to solve the problem that multiple electronic cigarettes cannot be charged simultaneously.

In order to achieve the above aim, the present invention provides a charger for an electronic cigarette according to independent claim 1. The charger provided by the present disclosure includes a housing, a control panel arranged inside the housing, a power supply hole arranged on the housing, and a plurality of charging assemblies arranged on the housing, the power supply hole and the plurality of charging assemblies both being configured to be in electrical connection with the control panel. The charging assembly further comprises a light guide ring, and the light guide ring is configured to guide out light inside the housing. The light guide ring has two side wings disposed thereon, the side wing defines a through hole thereon, the charging assembly further comprises a first bolt, and the first bolt is capable of passing through the through hole to fix the light guide ring on the housing.

Preferably, the charging assembly includes a charging contact core, an electro-conductive ring sleeved outside the charging contact core, and an insulating piece arranged between the charging contact core and the electro-conductive ring and configured to fix the charging contact core and the electro-conductive ring respectively, the charging contact core and the electro-conductive ring being configured to be insulated from each other and in electrical connection with the control panel respectively.

Preferably, the insulating piece includes an insulating ring fixed inside the electro-conductive ring and arranged close to a first end of the electro-conductive ring, an insulating loop fixed on the charging contact core, and an insulating sleeve fixed at a second end of the electro-conductive ring and partially arranged inside the electro-conductive ring, the insulating loop being limited between the insulating ring and the insulating sleeve.

Preferably, the insulating piece includes an elastic element compressed in advance between the insulating loop and the insulating sleeve.

Preferably, the insulating sleeve defines a shoulder hole therein, and the elastic element has one end abutted against the shoulder of the insulating sleeve and the other end abutted against the insulating loop.

Preferably, the charging contact core is shaped as a shoulder shaft, and the insulating loop is abutted against the shoulder of the charging contact core.

Preferably, the light guide ring is sleeved outside the electro-conductive ring.

Preferably, the electro-conductive ring is shaped as a shoulder shaft and has a nut arranged thereon, and the light guide ring is arranged between the shoulder of the electro-conductive ring and the nut.

Preferably, the housing includes a base, and a top cap mounted on the base; and the plurality of charging assemblies are distributed in an annular array on the top cap.

Preferably, the power supply hole is a Universal Serial Bus (USB) hole.

According to the technical scheme of the present disclosure, the charger is provided with a plurality of charging assemblies, so that multiple electronic cigarettes can be charged simultaneously with only one charger; moreover, only one socket jack is occupied during the charging process, which does not influence the usage of other electrical appliances. The charger according to the present disclosure is small in size and convenient to carry, has wide applicability and offers great convenience to household or travel.

### BRIEF DESCRIPTION OF THE DRAWINGS

For a better understanding of the embodiments of the present disclosure or the technical scheme in the prior art, accompanying drawings needed in the description of the embodiments or the prior art are simply illustrated below. Obviously, the accompanying drawings described below are some embodiments of the present disclosure. For the ordinary skill in the field, other accompanying drawings may be obtained according to the structure shown in these accompanying drawings without creative work.
FIG. 1 is a structure diagram of a charger for an electronic cigarette according to an embodiment of the present disclosure.
FIG. 2 is a cross-sectional view along line A-Aof FIG. 1.
FIG. 3 is an exploded view of a charger for an electronic cigarette according to an embodiment of the present disclosure.
FIG. 4 is an enlarged cross-sectional view of a charging assembly according to an embodiment of the present disclosure.
FIG. 5 is an exploded view of a charging assembly according to an embodiment of the present disclosure.

### Description of reference numbers in the drawings:

1-top cap, 2-charging assembly, 21-charging contact core, 22-electro-conductive ring, 23-insulating ring, 24-insulating loop, 25-insulating sleeve, 26-nut, 27-light guide ring, 28-elastic element, 29-first bolt, 3-power supply hole, 4-control panel, 41-second bolt, 5-base.

The implementation of aims, the function features and the advantages of the present disclosure are described below in further detail in conjunction with embodiments with reference to the drawings.

### DESCRIPTION OF THE EMBODIMENTS

A clear and complete description as below is provided for the technical scheme in the embodiments of the present disclosure in conjunction with the drawings in the embodiments of the present disclosure. Obviously, the embodiments described hereinafter are simply part embodiments of the present disclosure, but all the embodiments. All other embodiments obtained by the ordinary skill in the art based on the embodiments in the present disclosure without creative work are intended to be included in the scope of protection of the present disclosure

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly include one or more such features. In the description of the present disclosure, unless otherwise stated, "a plurality of" means at least two, for example, two, three, etc.

In the present disclosure, unless otherwise specifically stated and defined, terms "connected", "fixed", etc. should be interpreted expansively. For example, "fixed" may be fixed connection, also may be detachable connection, or integration; may be mechanical connection, also may be electrical connection; may be direct connection, also may be indirect connection through an intermediate, and may be internal communication between two elements or interaction of two elements, unless otherwise specifically defined. The ordinary skill in this field can understand the specific implication of the above terms in the present disclosure according to specific conditions.

In addition, technical schemes of each embodiment of the present disclosure may be combined mutually; however, this must be carried out on the basis that the ordinary skill in this field can implement the combination. When the combination of technical schemes has a conflict or cannot be implemented, it should considered that such combination of technical schemes does not exist and is not in the scope of protection claimed by the present disclosure.

The present disclosure provides a charger for an electronic cigarette, aiming to solve the problem that multiple electronic cigarettes cannot be charged simultaneously.

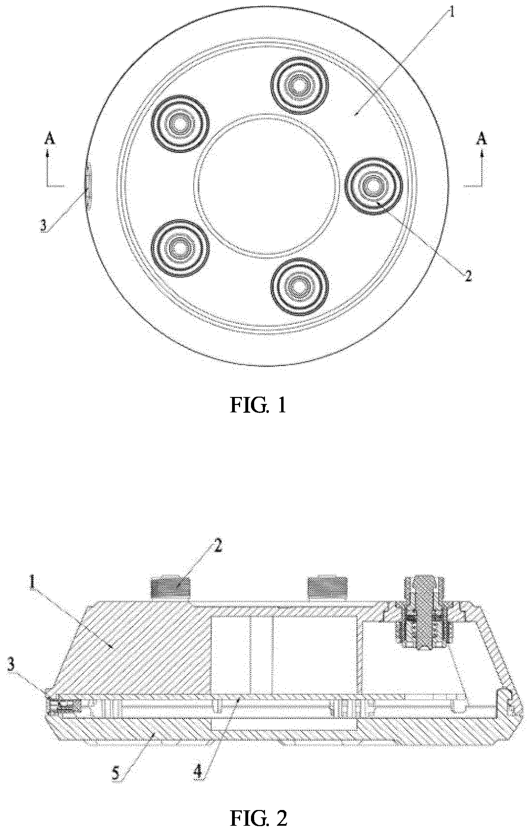

Referring to FIG. 1 to FIG. 3, in an embodiment of the present disclosure, a charger for an electronic cigarette includes a housing (not marked), a control panel 4 arranged inside the housing, a power supply hole 3 arranged on the housing, and a plurality of charging assemblies 2 arranged on the housing. The power supply hole 3 and the plurality of charging assemblies 2 both are configured to be in electrical connection with the control panel 4. The charger in this embodiment is provided with a plurality of charging assemblies 2, so that multiple electronic cigarettes can be charged simultaneously with only one charger; moreover, only one socket jack is occupied during the charging process, which does not influence the usage of other electrical appliances. The charger according to the present disclosure is small in size and convenient to carry, has wide applicability and offers great convenience to household or travel.

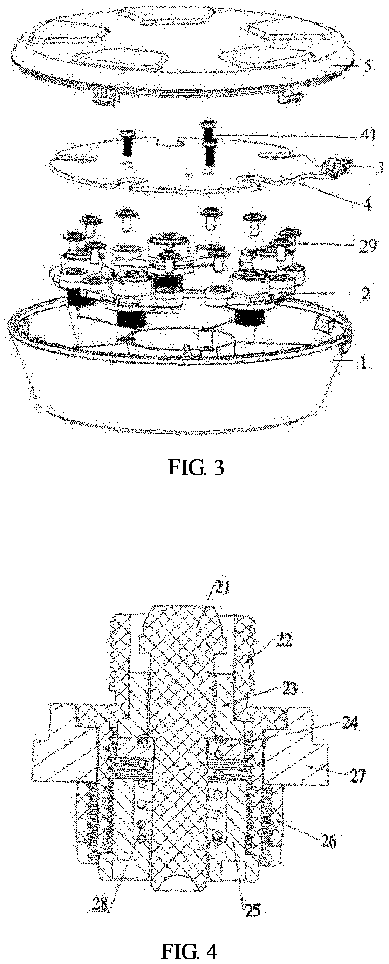

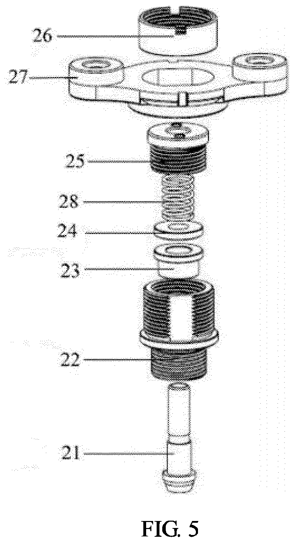

As a preferred embodiment, as shown in FIG. 4 and FIG. 5, the charging assembly 2 includes a charging contact core 21, an electro-conductive ring 22 sleeved outside the charging contact core 21, and an insulating piece (not marked) arranged between the charging contact core 21 and the electro-conductive ring 22 and configured to fix the charging contact core 21 and the electro-conductive ring 22 respectively. The charging contact core 21 and the electro-conductive ring 22 are configured to be insulated from each other and in electrical connection with the control panel 4 respectively. Herein, the electro-conductive ring 22 and the charging contact core 21 both can be made of copper preferably. Copper has good electrical conductivity. Of course, the electro-conductive ring 22 and the charging contact core 21 can also be made of other metal materials capable of conducting electricity, for example, silver, gold or aluminum, etc. Since the electro-conductive ring 22 and the charging contact core 21 have an insulating piece arranged there-between, the electro-conductive ring 22 and the charging contact core 21 can be insulated from each other. The control panel 4 has electronic wires thereon welded to the electro-conductive ring 22 and the charging contact core 21 respectively, wherein the charging contact core 21 is a positive electrode of the charging assembly and the electro-conductive ring 22 is a negative electrode of the charging assembly 2.

As shown in FIG. 4, the insulating piece includes an insulating ring 23 fixed inside the electro-conductive ring 22 and arranged close to a first end of the electro-conductive ring 22, an insulating loop 24 fixed on the charging contact core 21, and an insulating sleeve 25 fixed at a second end of the electro-conductive ring 22 and partially arranged inside the electro-conductive ring 22. The insulating loop 24 is limited between the insulating ring 23 and the insulating sleeve 25, that is, the insulating loop 24 has a first end capable of contacting the insulating ring 23 and a second end capable of contacting the insulating sleeve 25. The first end and the second end of the electro-conductive ring 22 are two opposing ends arranged on the electro-conductive ring 22 along an axial direction. The first end and the second end of the insulating loop 24 are two opposing ends arranged on the insulating loop 24 along an axial direction. Through the cooperation of the insulating ring 23, the insulating loop 24 and the insulating sleeve 25, the electro-conductive ring 22 and the charging contact core 21 are fixed together and are insulated from each other. The first end of the electro-conductive ring 22 and the charging contact core 21 together define a charging interface matched with a charging port of an electronic cigarette. The insulating ring 23, the insulating loop 24 and the insulating sleeve 25 all can be made of insulating materials, for example, engineering plastics or rubber, etc. It should be noted that, in other embodiments, the insulating piece can also be in other shapes, only if it is capable of fixing the electro-conductive ring 22 and the charging contact core 21 and allowing the electro-conductive ring 22 and the charging contact core 21 to be insulated from each other.

In the above embodiment, the insulating ring 23 is preferably in interference fit with an inner wall of the electro-conductive ring 22 to realize fixation; however, a gap is defined between an inner surface of the insulating ring 23 and the charging contact core 21, ensuring that the charging contact core 21 is capable of sliding inside the insulating ring 23 in an axial direction. In addition, the electro-conductive ring 22 defines a shoulder hole therein. The insulating ring 23 has a first end extending towards the first end of the electro-conductive ring 22 and a second end provided with a flange. The flange of the insulating ring 23 is abutted against the shoulder inside the electro-conductive ring 22. Herein, the shoulder refers to an annular plane where the inner diameter of the shoulder hole changes suddenly. The insulating sleeve 25 extends into the electro-conductive ring 22 partially, and this portion is in threaded connection with the electro-conductive ring 22 so as to realize fixation. A gap is defined between an inner surface of the insulating sleeve 25 and the charging contact core 21, ensuring that the charging contact core 21 is capable of sliding inside the insulating sleeve 25 in an axial direction, so that the charging interface is in sufficient contact with the charging port of the electronic cigarette and the normal charging of the electronic cigarette can be ensured.

Further, the insulating piece further includes an elastic element 28 compressed in advance between the insulating loop 24 and the insulating sleeve 25, so that the insulating loop 24 fixed on the charging contact core 21 can be compressed onto the insulating ring 23 in advance. During the charging process, the charging contact core 21 can adapt to the charging port of the electronic cigarette automatically. The charging contact core 21 is compressed into the charting port under the action of the elastic element 28, preventing that the charging contact core 21 is disengaged from the charging port due to external vibration, and ensuring that the charging is successfully carried out. Herein, the elastic element 28 can be a spring or rubber, etc. For the convenient installation of the elastic element 28, the insulating sleeve 25 defines a shoulder hole therein, and the elastic element 28 has one end abutted against the shoulder of the insulating sleeve 25 and the other end abutted against the insulating loop 24. The elastic element 28 is compressed between the shoulder of the insulating sleeve 25 and the insulating loop 24 in advance.

In addition, as a further preferred embodiment, referring to FIG. 4, the charging contact core 21 is shaped as a shoulder shaft, and the insulating loop 24 is abutted against the shoulder of the charging contact core 21. The charging contact core 21 defines, on the position close to the shoulder, an annular groove having shallow depth and distributed along the circumference. The insulating loop 24 is arranged in the annular groove and contacts the shoulder of the charging contact core 21, thereby being fixed with the charging contact core 21 and being capable of moving along with the charging contact core 21 in an axial direction during the process of the charging contact core 21 docking with the charging port of the electronic cigarette.

Further, the charging assembly 2 further includes a light guide ring 27 sleeved outside the electro-conductive ring 22 and configured to guide out the light inside the housing. The light guide ring 27 is a transparent element, which is capable of transmitting light. The light guide ring 27 can transmit light of different colors emitted by a light emitting diode on the control panel 4 to the outside of the housing, so that a user can learn the charging state. Herein, for convenient installation of the light guide ring 27, the electro-conductive ring 22 is shaped as a shoulder shaft and the electro-conductive ring 22 further has a nut 26 arranged thereon. The light guide ring 27 is arranged between the shoulder of the electro-conductive ring 22 and the nut 26. The nut 26 and the electro-conductive ring 22 are capable of conducting electricity to each other. The nut 26 is a negative electrode of the charging assembly 2 too. In addition, as shown in FIG. 5, the light guide ring 27 has two side wings disposed thereon, the two side wings extending towards two opposite directions on a plane perpendicular to an axial line of the light guide ring 27. The side wing defines a through hole thereon. A first bolt 29 is capable of passing through the through hole to fix the light guide ring 27 on the housing.

Specifically, the assembling process of the charging assembly 2 in the above embodiment is as follows. First, the insulating ring 23 is compressed into the electro-conductive ring 22; then, the insulating loop 24 is compressed into the annular groove on the charging contact core 21, and the charging contact core 21 is placed in the electro-conductive ring 22, allowing the first end of the insulating loop 24 to contact the second end of the insulating ring 23; next, the elastic element 28 is put in the electro-conductive ring 22, and the insulating sleeve 25 is screwed on the internal thread of the electro-conductive ring 2; and finally, the light guide ring 27 is mounted to the shoulder of the electro-conductive ring 22, and the nut 26 is screwed on the external thread of the electro-conductive ring 22 so as to press the light guide ring 27 against the shoulder of the electro-conductive ring 22. Now, the assembling of the charging assembly 2 is completed.

Further, as shown in FIG. 1 to FIG. 3, the housing includes a base 5, and a top cap 1 mounted on the base 5; and the plurality of charging assemblies 2 are distributed in an annular array on the top cap 1. Specifically, referring to FIG. 1, five charging assemblies 2 are distributed in an annular array on the top cap 1. The base 5 and the top cap 1 are fixed together through the fit of a snap projection and a snap-in groove. The power supply hole 3 is defined between the base 5 and the top cap 1. In order to enhance the adaptability of the charger, the power supply hole 3 is a USB hole preferably, so that the charger is capable of matching with universal USB lines. USB is an external bus standard used for normalizing the connection and communication between computers and peripherals and is an interface technology applied to Personal Computer (PC) fields.

Specifically, referring to FIG. 3, the assembling process of the charger in the above embodiment is as follows. First, the five charging assemblies 2 are placed to corresponding positions on the top cap 1, and each charging assembly 2 is mounted with two first bolts 29 so that the charging assembly is fixed on the top cap 1; then, electronic wires on the control panel 4 are welded to corresponding positive and negative electrodes of each charging assembly 2; next, the control panel 4 is placed on the top cap 1 and is mounted with three second bolts 41 so that the control panel is fixed on the top cap 1; and finally, the base 5 is placed corresponding to the USB position on the control panel 4, and the five snap projections are compressed into the five snap-in grooves on the top cap 1 to realize fastening.

The above are preferred embodiments of the present disclosure merely and are not intended to limit the patent scope of the present disclosure. Any equivalent structures made according to the description and the accompanying drawings of the present disclosure without departing from the idea of the present disclosure, or any equivalent structures applied in other relevant technical fields directly or indirectly are intended to be included in the patent protection scope of the present disclosure.

## Claims

1. A charger for an electronic cigarette, comprising a housing, a control panel (4) arranged inside the housing, a power supply hole (3) arranged on the housing, and a plurality of charging assemblies (2) arranged on the housing, the power supply hole (3) and the plurality of charging assemblies (2) both being configured to be in electrical connection with the control panel (4),
wherein the charging assembly (2) further comprises a light guide ring (27), and the light guide ring (27) is configured to guide out light inside the housing;
**characterized in that**:
the light guide ring (27) has two side wings disposed thereon, the side wing defines a through hole thereon, the charging assembly (2) further comprises a first bolt (29), and the first bolt (29) is capable of passing through the through hole to fix the light guide ring (27) on the housing.

2. The charger for an electronic cigarette according to claim 1, wherein the charging assembly (2) comprises a charging contact core (21), an electro-conductive ring (22) sleeved outside the charging contact core (21), and an insulating piece arranged between the charging contact core (21) and the electro-conductive ring (22) and configured to fix the charging contact core (21) and the electro-conductive ring (22) respectively, the charging contact core (21) and the electro-conductive ring (22) being configured to be insulated from each other and in electrical connection with the control panel (4) respectively.

3. The charger for an electronic cigarette according to claim 2, wherein the insulating piece comprises an insulating ring (23) fixed inside the electro-conductive ring (22) and arranged close to a first end of the electro-conductive ring (22), an insulating loop (24) fixed on the charging contact core (21), and an insulating sleeve (25) fixed at a second end of the electro-conductive ring (22) and partially arranged inside the electro-conductive ring (22), the insulating loop (24) being limited between the insulating ring (23) and the insulating sleeve (25).

4. The charger for an electronic cigarette according to claim 3, wherein the insulating piece comprises an elastic element (28) compressed in advance between the insulating loop (24) and the insulating sleeve (25).

5. The charger for an electronic cigarette according to claim 4, wherein the insulating sleeve (25) defines a shoulder hole therein, and the elastic element (28) has one end abutted against the shoulder of the insulating sleeve (25) and the other end abutted against the insulating loop (24).

6. The charger for an electronic cigarette according to claim 3, wherein the charging contact core (21) is shaped as a shoulder shaft, and the insulating loop (24) is abutted against the shoulder of the charging contact core (21).

7. The charger for an electronic cigarette according to any one of claims 2 to 6, wherein the light guide ring (27) is sleeved outside the electro-conductive ring (22).

8. The charger for an electronic cigarette according to 7, wherein the electro-conductive ring (22) is shaped as a shoulder shaft and has a nut (26) arranged thereon, and the light guide ring (27) is arranged between the shoulder of the electro-conductive ring (22) and the nut (26).

9. The charger for an electronic cigarette according to any one of claims 1 to 6, wherein the housing comprises a base (5), and a top cap (1) mounted on the base (5); and the plurality of charging assemblies (2) are distributed in an annular array on the top cap (1).

10. The charger for an electronic cigarette according to any one of claims 1 to 6, wherein the power supply hole (3) is a Universal Serial Bus (USB) hole.

## Patentansprüche

1. Ladegerät für eine elektronische Zigarette, umfassend ein Gehäuse, ein im Inneren des Gehäuses angeordnetes Bedienfeld (4), ein am Gehäuse angeordnetes Stromversorgungsloch (3) und mehrere am Gehäuse angeordnete Ladeanordnungen (2), wobei das Stromversorgungsloch (3) und die mehreren Ladeanordnungen (2) konfiguriert sind, um in elektrischer Verbindung mit dem Bedienfeld (4) zu stehen, wobei die Ladeanordnung (2) ferner einen Lichtleiterring (27) umfasst, wobei der Lichtleiterring (27) konfiguriert ist, das Licht innerhalb des Gehäuses herauszuleiten, **dadurch gekennzeichnet, dass**
der Lichtleiterring (27) zwei darauf angeordnete Seitenflügel aufweist, wobei der Seitenflügel ein Durchgangsloch darauf definiert, wobei die Ladungsanordnung (2) ferner einen ersten Bolzen (29) umfasst, und der erste Bolzen (29) so ausgeformt ist, durch das Durchgangsloch zu passen, um den Lichtleiterring (27) am Gehäuse zu fixieren.

2. Ladegerät für eine elektronische Zigarette nach Anspruch 1, wobei die Ladeanordnung (2) einen Ladekontaktkern (21), einen außerhalb des Ladekontaktkerns (21) umhüllten elektrisch leitenden Ring (22) und ein zwischen dem Ladekontaktkern (21) und dem elektrisch leitenden Ring (22) angeordnetes Isolierstück aufweist, welches konfiguriert ist, den Ladekontaktkern (21) bzw. den elektrisch leitenden Ring (22) zu fixieren, wobei der Ladekontaktkern (21) und der elektrisch leitende Ring (22) so konfiguriert sind, dass sie voneinander isoliert sind und beide in elektrischer Verbindung mit dem Bedienfeld (4) stehen.

3. Ladegerät für eine elektronische Zigarette nach Anspruch 2, wobei das Isolierstück einen Isolierring (23), der im Inneren des elektrisch leitenden Rings (22) befestigt ist und in der Nähe eines ersten Endes des elektrisch leitenden Rings (22) angeordnet ist, eine Isolierschleife (24), die am Ladekontaktkern (21) befestigt ist, und eine Isolierhülse (25) umfasst, die an einem zweiten Ende des elektrisch leitenden Rings (22) befestigt und teilweise innerhalb des elektrisch leitenden Rings (22) angeordnet ist, wobei die Isolierschleife (24) zwischen dem Isolierring (23) und der Isolierhülse (25) begrenzt ist.

4. Ladegerät für eine elektronische Zigarette nach Anspruch 3, wobei das Isolierstück ein elastisches Element (28) aufweist, das vorab zwischen der Isolierschleife (24) und der Isolierhülse (25) zusammengedrückt ist.

5. Ladegerät für eine elektronische Zigarette nach Anspruch 4, wobei die Isolierhülse (25) darin ein Schulterloch definiert und das elastische Element (28) mit einem Ende gegen die Schulter der Isolierhülse (25) und mit dem anderen Ende gegen die Isolierschleife (24) stößt.

6. Ladegerät für eine elektronische Zigarette nach Anspruch 3, wobei der Ladekontaktkern (21) als Schulterwelle geformt ist und die Isolierschleife (24) an der Schulter des Ladekontaktkerns (21) anliegt.

7. Ladegerät für eine elektronische Zigarette nach einem der Ansprüche 2 bis 6, wobei der Lichtleiterring (27) außerhalb des elektrisch leitenden Rings (22) umhüllt ist.

8. Ladegerät für eine elektronische Zigarette nach Anspruch 7, wobei der elektrisch leitende Ring (22) als Schulterwelle geformt ist und eine darauf angeordnete Mutter (26) aufweist und der Lichtleiterring (27) zwischen der Schulter des elektrisch leitenden Rings (22) und der Mutter (26) angeordnet ist.

9. Ladegerät für eine elektronische Zigarette nach einem der Ansprüche 1 bis 6, wobei das Gehäuse eine Basis (5) und eine auf der Basis (5) montierte obere Kappe (1) aufweist; und die mehreren Ladeanordnungen (2) sind in einer ringförmigen Anordnung auf der oberen Kappe (1) verteilt.

10. Ladegerät für eine elektronische Zigarette nach einem der Ansprüche 1 bis 6, wobei das Stromversorgungsloch (3) ein USB-Loch (Universal Serial Bus) ist.

## Revendications

1. Chargeur destiné à une cigarette électronique, comprenant un boîtier, un panneau de commande (4) disposé à l'intérieur du boîtier, un trou du bloc d'alimentation (3) disposé sur le boîtier et une pluralité d'ensembles de charge (2) disposés sur le boîtier, le trou du bloc d'alimentation (3) et la pluralité des ensembles de charge (2) étant tous deux conçus pour être en liaison électrique avec le panneau de commande (4),
dans lequel l'ensemble de charge (2) comprend en outre une bague de guidage de lumière (27) et la bague de guidage de lumière (27) est conçue pour guider la lumière à l'intérieur du boîtier ;
**caractérisé en ce que** :
la bague de guidage de lumière (27) présente deux ailes latérales disposées sur celle-ci, l'aile latérale définit un trou traversant sur celle-ci, l'ensemble de charge (2) comprend en outre un premier boulon (29) et le premier boulon (29) est apte à passer par le trou traversant pour fixer la bague de guidage de lumière (27) au boîtier.

2. Chargeur destiné à une cigarette électronique selon la revendication 1, dans lequel l'ensemble de charge (2) comprend un noyau de contact de charge (21), une bague électroconductrice (22) gainée à l'extérieur du noyau de contact de charge (21) et une pièce isolante disposée entre le noyau de contact de charge (21) et la bague électroconductrice (22) et conçue pour fixer respectivement le noyau de contact de charge (21) et la bague électroconductrice (22), le noyau de contact de charge (21) et la bague électroconductrice (22) étant conçus pour être isolés l'un par rapport à l'autre et reliés électriquement avec le panneau de contrôle (4).

3. Chargeur destiné à une cigarette électronique selon la revendication 2, dans lequel la pièce isolante comprend une bague isolante (23) fixée à l'intérieur de la bague électroconductrice (22) et disposée à proximité d'une première extrémité de la bague électroconductrice (22), une boucle isolante (24) fixée sur le noyau de contact de charge (21) et un manchon isolant (25) fixé à une seconde extrémité de la bague électroconductrice (22) et disposé partiellement dans la bague électroconductrice (22), la boucle isolante (24) étant limitée entre la bague isolante (23) et le manchon isolant (25).

4. Chargeur destiné à une cigarette électronique selon la revendication 3, dans lequel la pièce isolante comprend un élément élastique (28) comprimé au préalable entre la boucle isolante (24) et le manchon isolant (25).

5. Chargeur destiné à une cigarette électronique selon la revendication 4, dans lequel le manchon isolant (25) définit un trou d'épaulement dans celui-ci et l'élément élastique (28) présente une extrémité en butée contre l'épaulement du manchon isolant (25) et l'autre extrémité en butée contre la boucle isolante (24).

6. Chargeur destiné à une cigarette électronique selon la revendication 3, dans lequel le noyau de contact de charge (21) est en forme d'épaulement d'épaulement et la boucle isolante (24) est en butée contre l'épaulement du noyau de contact de charge (21).

7. Chargeur destiné à une cigarette électronique selon l'une quelconque des revendications 2 à 6, dans lequel la bague de guidage de lumière (27) est gainée à l'extérieur de la bague électroconductrice (22).

8. Chargeur destiné à une cigarette électronique selon la revendication 7, dans lequel la bague électroconductrice (22) est en forme d'épaulement et présente un écrou (26) disposé sur celle-ci et la bague de guidage de lumière (27) est disposée entre l'épaulement de la bague électroconductrice(22) et l'écrou (26).

9. Chargeur destiné à une cigarette électronique selon l'une quelconque des revendications 1 à 6, dans lequel le boîtier comprend une base (5) et un capuchon supérieur (1) monté sur la base (5) ; et la pluralité d'ensembles de charge (2) sont répartis dans un réseau annulaire sur le capuchon supérieur (1).

10. Chargeur destiné à une cigarette électronique selon l'une quelconque des revendications 1 à 6, dans lequel le trou du bloc d'alimentation (3) est un trou de bus série universel (USB).
